# FASCICULE DE BREVET EUROPEEN

(11) **EP 3 476 911 B1**
(45) Date de publication et mention de la délivrance du brevet: **07.09.2022**
(21) Numéro de dépôt: 18203850.5
(22) Date de dépôt: 31.10.2018
(51) Int. Cl.: C09J 7/35, C09J 177/02, C09J 5/06, C09J 177/06

(54) **COMPOSITION ET STRUCTURE D'UN ADHESIF MULTIPHASIQUE RETICULABLE**
ZUSAMMENSETZUNG UND STRUKTUR EINES ABZIEHBAREN MEHRPHASEN-AUFKLEBERS
COMPOSITION AND STRUCTURE OF A CROSS-LINKABLE MULTI-PHASE ADHESIVE

(30) Priorité: 31.10.2017 FR 1771132
(43) Date de publication de la demande: 01.05.2019
(73) Titulaire: Protechnic, 68702 Cernay (FR)
(72) Inventeur: CONZATTI, Franciele, 68702 CERNAY (FR)
(74) Mandataire: Hirsch & Partners

(56) Documents cités:
- WO-A1-00/71343
- WO-A1-2005/061640
- GB-A- 2 135 673
- US-A- 5 952 071

## Description

### [Domaine de l'invention]

La présente invention concerne les compositions et les structures multiphasiques d'un adhésif thermo-réticulable destiné au collage de deux matériaux. Plus précisément les structures de tels adhésifs sont constituées de deux ou plusieurs phases superposées et (ou) interpénétrées, dont les composants respectifs A et B peuvent réagir ensemble par contact lors d'un procédé d'assemblage en présence de chaleur et d'une éventuelle pression pour former un joint de colle réticulé ou très visqueux à chaud.

Dans leur utilisation la plus avantageuse, les compositions de cet adhésif se présentent sous forme de films (par superposition) , de mailles (superposées et (ou) interpénétrées) ou de non tissés appelés également web (superposées et (ou) interpénétrées).

Dans le cas de la superposition de plusieurs phases , la position de celles-ci dépendra de la nature des matériaux à coller.

### [L'art antérieur et le problème technique]

La plupart des colles thermofusibles sont composées de matériaux thermoplastiques solides à une température inférieure à leur température de fusion et qui se ramollissent sous l'action de la chaleur et durcissent en se refroidissant, de manière réversible.

Ces colles exemptes de solvants sont désignées communément par l'abréviation HMA (Hot Melt Adhesives) et sont généralement utilisées pour assembler une variété de matériaux tels que le bois, les métaux, le cuir, les imitations cuir, les tissés et non tissés, le papier, le verre et différents supports plastiques etc. Il est connu d'utiliser des copolyamides, copolyester, des polymères à base de polyoléfines, l'acétate de vinyle, les acrylates et analogues, comme des adhésifs thermofusibles à chaud.

Le collage peut être réalisé par enduction à chaud entre deux substrats, suivie d'un refroidissement. Un autre procédé consiste à apposer, à l'état solide, la colle sous la forme d'un film, d'un web ou d'une maille entre les deux substrats puis à chauffer l'ensemble jusqu'à l'obtention de la fusion de celle-ci. Les supports sont ainsi collés après refroidissement.

Cependant par leur caractère réversible, les adhésifs thermofusibles sont généralement utilisés dans des domaines d'application où les niveaux de température d'utilisation sont inférieurs à leurs points de fusion. Proche ou au-dessus de leurs points de fusion l'adhésion diminue et les risques de décollement deviennent importants. Cet inconvénient peut imposer certaines limitations dans l'application de ces compositions adhésives dans certains secteurs.

On peut remédier à cet inconvénient en procédant à une réaction de réticulation ou à une réaction d'allongement de chaines de l'adhésif lors de la phase de collage. Ainsi l'adhésif reste à l'état solide ou très visqueux quand la température augmente et se rapproche ou dépasse la température de fusion initiale de l'adhésif avant réaction. De façon à diminuer le temps de collage et augmenter le taux final de réticulation ou le degré d'allongement de chaines, une préréticulation ou préréaction est envisageable. L'art antérieur a décrit de nombreuses solutions de ce type.

Les brevets DE 3725486, EP940461,WO2002026887,JP1249873 décrivent une réticulations par des isocyanates bloqués ou non bloqués.

Le brevet US 6515048 décrit une formulation poudre composée de résine époxy et polyamine

Le brevet GB 2135673 décrit un tissus de verre dont les fibres sont enduites d'une résine liquide epoxy, puis d'une enduction polyamide qui réagissent ensemble sous l'effet de la pression et de la température.

Le brevet US 3409497 décrit un procédé identique au brevet GB 2135673 mais en faisant réagir une résine bisphénol à terminaisons hydroxylées avec une résine époxy Le brevet 326444 décrit un textile recouvert sur l'une de ses faces d'un adhésif HMA dans lequel est dispersé un agent de réticulation encapsulé. On pose ce textile sur un matériau de telle sorte que l'adhésif soit du côté du matériau. Sous les actions conjuguées de la pression et de la température on obtient simultanément un collage et une réticulation.

Le brevet US 6111030 décrit un système latent à base de polyamide pour la réticulation des époxy,des polysulfures ou des cyanoacrylates.

Le brevet EP 1685204A1 décrit un système bicomposants solides dont le premier réactif est à base d'un Copolyamide, et le deuxième réactif est composé de copolymères de l'éthylène du méthacrylate de glycidyle (GMA) et éventuellement d'un (meth)acrylate d'alkyle et les copolymères à base d'épichloridrine ou des polymères portant des fonctions anhydrides d'acide carboxylique tels que les copolymères de l'éthylène de l'anhydride maleique (MAH) et éventuellement d'un (meth)acrylate d'alkyle, les polymères portant des fonctions acide carboxylique tels que les copolymères de l'éthylène de l'acide acrylique et éventuellement d'un (meth)acrylate d'alkyle.

L'inconvénient de ce système réside au fait que l'un des réactifs est à base de polyoléfines fonctionnelles dont la viscosité de fusion très élevée rend difficile sa transformation en non tissés ou sous forme de mailles. La viscosité de fusion très élevées de ces produits rendent difficile l'homogénéité de la colle par contact avec l'autre l'élément réactif. Les fonctions réactives sont greffées le long de la chaine principale, ce qui limite leur taux et en conséquence leur réactivité vis à vis du premier composant.

Le brevet EP 940461 décrit un HMA constitué de polyéthylène dans lequel sont dispersés une poudre réactive et un agent de réticulation et tels qu'ils ne réagissent pas tant que le polyéthylène n'est pas fondu. Le brevet EP 373878 décrit un adhésif sous la forme d'une résine acrylique modifiée par un aminoamide mélangée avec un polyol et un initiateur radicalaire. On provoque la réticulation par chauffage.

Le brevet EP 20050290820 concernent des polyamides branchés à extrémités insaturées qui peuvent être réticulés sous l'action de rayonnement UV , par irradiation gamma ou bêta ou l'action de peroxydes .

L'inconvénient de ces techniques est qu'il faut soit : bien séparer les composants de l'adhésif pour éviter une réticulation avant le collage des deux matériaux, soit : bien choisir les composants de l'adhésif pour qu'il n'y ait pas de réaction de réticulation ou d'allongement de chaines avant une température déterminée et/ou que les matériaux soient bien disposés l'un contre l'autre pour constituer un assemblage définitif. Certains composants de l'adhésif peuvent également, à cause de leur instabilité thermique, se décomposer et disparaître progressivement de la composition de l'adhésif (cas des péroxydes), ou par leur sensibilité à l'humidité par exemple (isocyanates) ne plus assurer leur fonction d'agent de réticulation ou d'allongement de chaines moléculaires.

Les conditions de stockage de transport ou de manipulations sont rendues d'autant plus difficiles par l'instabilité de ces composants réactifs.

Nous nommerons "phases" les parties de l'adhésif sous formes de voiles , grilles, ou de films.

En fonction de ces critères il nous est apparu plus aisé à travers plusieurs compositions d'adhésifs d'adapter la réactivité chimique afin de contrôler les taux de réticulation ou d'allongement de chaines d'un système composé de deux phases superposées ou interpénétrées.

Ainsi nous avons pu développer des adhésifs réactifs avec des taux de réticulation ou des allongements de chaines plus ou moins importants et qui ont permis d'augmenter les tenues en température et chimiques des joints de colle.

L'objet de la présente invention est tel que défini dans les revendications 1 à 14.

Dans la présente description, les termes « phase » et « structure » sont synonymes et seront utilisés de manière interchangeable.

On entend par phase ou structure une composition à laquelle un opérateur a conféré une forme prédéfinie. Une phase ou structure peut être sous forme de voile, de grille, de film, de web, de net, ou de maille.

Nous désignerons par compositions (A) les compositions de la phase (A) de l'adhésif sous forme de web, film,nets ou d'un réseau, la phase (A) étant destinée à être interpénétrée avec la phase (B).

Les compositions (A) selon l'invention sont constituées de polymères du type COPA (copolyamides) possédant des fins de chaines réactives aminées ou acides de type COOH.

Nous désignerons par compositions (B) les compositions de la phase (B) de l'adhésif sous forme de web, film,nets ou d'un réseau, la phase (B) étant destinée à être interpénétrée avec la phase (A).

La structure en film peut provenir d'un procédé d'extrusion de la composition (A) ou (B) suivie d'un étirement de la composition (A) ou (B).

La structure en film peut également résulter d'un procédé de dépôt à plat en couche mince d'une composition (A) ou (B).

On entend par structure web un enchevêtrement aléatoire de fibres de différentes dimensions de composition (A) ou (B).

On entend par net ou maille un arrangement ordonné et régulier de dépôt de la compositions (A) ou (B), ledit arrangement présentant des ouvertures encore appelées jours.

La composition (B) selon l'invention est constituée d'une partie majoritaire en poids (B1) de la composition (B) de polymères tels que, les copolyamides, les polyesters, les phénoxy ne possédant pas ou peu de fonctions réactives ; et d'une partie réactive minoritaire en poids (B2) choisie parmi les résines époxydiques.. Les parties (B1) et (B2) peuvent être associées par simple mélange mécanique à froid, ou sous forme de compound à chaud. Ce mélange étant ensuite transformé par extrusion sous forme de webs, de nets, ou de films. Lors du contact à froid des deux phases (A) et (B), aucune réaction chimique ne se produit. Lors du collage à chaud et sous pression, les deux phases se mélangent au moins en partie et peuvent réagir ensemble, soit en créant des allongements de chaines moléculaires, soit en formant un réseau réticulé plus ou moins dense en fonction des compositions des phases (A) et (B). Ces réactions chimiques sont contrôlées en fonction de la proportion de fins de chaines aminés de la phase (A) et de la proportion de sites réactifs oxirane contenus dans la phase (B). On entend par « à chaud » une température supérieure ou égale à la température de fusion la plus élevée entre la température de fusion des compositions de la phase (A) et la température de fusion des compositions de la phase (B).

Selon un mode de réalisation particulier, la présente invention porte sur un réactif bi-composant pouvant comprendre au moins une composition (A) et une composition (B), ces deux compostions pouvant réagir ensemble par contact sous l'action de la chaleur et d'une éventuelle pression.

Selon un autre mode de réalisation, les phases (A) et (B) peuvent indépendamment de leur forme être associées en système biphasique ou multiphasique.

### Compositions de la phase (A) :

Il s'agit des copolyamides connus comme adhésifs du type "hot melt adhesives" (ou HMA). Le point de fusion de ces CoPA (HMA) est généralement compris dans la gamme de 80 à 190°C, de préférence de 90 à 160°C. La composition en monomères et le ratio en poids entre les monomères déterminent notamment les propriétés d'adhérence sur différents supports et la résistance chimique de ces CoPA. Ces propriétés des CoPA (HMA) sont déjà exploitées dans le textile, dans la fabrication de films, filaments, voiles ou grilles, de vernis, de peintures, d'encres et le revêtement de matériaux, notamment sous la forme de poudres fines de CoPA.

En fonction de la réactivité désirée, les CoPA constituant la phase (A) comporteront des extrémités aminées (NH2) ou acides (COOH). Une forte réactivité vis à vis de la phase (B) contenant par exemple des résines types époxydiques impliquera un nombre important d'extrémités aminés (NH2). Inversement une plus faible réactivité fera appel à un nombre d'extrémités acides plus important par rapport au nombre total d'extrémités acides et aminées.

Un mélange de plusieurs CoPA à différents taux de terminaisons acides et (ou) amines est envisageable.

De préférence la phase (A) sera composée majoritairement de CoPA (HMA) à terminaisons type aminées, les dits copolyamides comportant plus de 50% molaire d'extrémités aminées sur le nombre total d'extrémités aminées et acides du copolyamide.

Il est également possible d'adapter les extrémités des CoPA (HMA) par l'utilisation de composés polyfonctionels au cours de la synthèse.

Par composé polyfonctionnel, on entend un composé ayant plus de 2 fonctions acide(s) et/ou amine(s). On peut citer à titre d'exemples, la diéthylène triamine (DETA) ; une polyéthertriamine, telle que la Jeffamine T403 ; la Bis(Hexamethylene)Triamine ; l'EDTA ; l'acide mellitique.

On utilise de préférence les composés monoamines et/ou diamines, pour obtenir des (co)polyamides conformes à l'invention qui possèdent des extrémités de chaîne majoritairement aminées. Lors de la synthèse de ces (co)polyamides, les réactions de condensation peuvent être effectuer avec un excès de fonctions aminées.

Par CoPA on entend les produits de polymérisation d'au moins deux monomères différents choisi parmi :
- les monomères de type aminoacides ou acides aminocarboxyliques, et de préférence les acides alpha, oméga-aminocarboxyliques;
- les monomères de type lactames ayant de 3 à 18 atomes de carbone sur le cycle principal et pouvant être substitués ;
- les monomères de type « diamine- diacide » issus de la réaction entre une diamine aliphatique ayant de 4 et 36 atomes de carbone, de préférence de 4 à 18 atomes de carbone et un diacide carboxylique ayant de 4 et 36 atomes de carbone, de préférence de 4 à 18 atomes de carbone ; et
- leurs mélanges, avec des monomères à nombre de carbone différent dans le cas de mélanges entre un monomère de type aminoacide et un monomère de type lactame. Monomères de type aminoacides :
   A titre d'exemples d'alpha, oméga-aminoacides, on peut citer ceux ayant de 4 à 18 atomes de carbone, tels que les acides aminocaproïque, 7-aminoheptanoïque, 11-aminoundécanoïque, N-heptyl-11-aminoundécanoïque et 12-aminododécanoïque.

Monomères de type lactames :
A titre d'exemples de lactames, on peut citer ceux ayant de 3 à 18 atomes de carbone sur le cycle principal et pouvant être substitués. On peut citer par exemple le β,β-diméthylpropriolactame, le α,α-diméthylpropriolactame, l'amylolactame, le caprolactame aussi appelé lactame 6, le capryllactame aussi appelé lactame 8, l'oenantholactame et le lauryllactame aussi appelé lactame 12.

Monomères de type « diamine- diacide » :
A titre d'exemples d'acide dicarboxylique, on peut citer les acides ayant de 4 et 36 atomes de carbone de carbone. On peut citer par exemple, l'acide adipique, l'acide sébacique, l'acide azélaïque, l'acide subérique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98% et sont de préférence hydrogénés) et l'acide dodécanédioïque HOOC-(CH2)i₀-COOH, et l'acide tétradécanedioïque.

On entend plus particulièrement par dimères d'acides gras ou acides gras dimérisés, le produit de la réaction de dimérisation d'acides gras (contenant généralement 18 atomes de carbone, souvent un mélange d'acide oléique et/ou linoléique). Il s'agit de préférence d'un mélange comprenant de 0 à 15% de monoacides en C18, de 60 à 99% de diacides en C36, et de 0,2 à 35% de triacides ou polyacides en C54 ou plus.

Dans un mode de réalisation particulier, le dimère d'acide carboxylique contient au plus 15 atomes de carbone.

A titre d'exemple de diamine, on peut citer les diamines aliphatiques ayant de 4 à 36 atomes, de préférence de 4 à 18 atomes, pouvant être aryliques et/ou cycliques saturées. A titre d'exemples on peut citer l'hexaméthylènediamine, la pipérazine (abrégée « Pip »), l'aminoethylenepiperazine, la tetraméthylène diamine, roctaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPMD), la bis(aminocyclohéxyl) méthane (BACM), la bis(3-méthyl-4 aminocyclohéxyl) méthane (BMACM), la méthaxylyènediamine, et le bis-p aminocyclohexylméthane.

A titre d'exemples de monomères de type « diamine-diacide », on peut citer ceux résultant de la condensation de l'hexaméthylène diamine avec un diacide C6 à C36, notamment les monomères : 6.6, 6.10, 6.11, 6.12, 6.14, 6.18. On peut citer les monomères résultant de la condensation de la décanediamine avec un diacide C6 à C36, notamment les monomères : 10.10, 10.12, 10.14, 10.18.

A titre d'exemples de copolyamides formés à partir des différents types de monomères décrits ci-dessus, on peut citer les copolyamides résultant de la condensation d'au moins deux acides alpha,oméga-aminocarboxyliques ou de deux lactames ou d'un lactame et d'un acide alpha,oméga-aminocarboxylique. On peut encore citer les copolyamides résultant de la condensation d'au moins un acide alpha,oméga-aminocarboxylique (ou un lactame), au moins une diamine et au moins un acide dicarboxylique. On peut encore citer les copolyamides résultant de la condensation d'une diamine aliphatique avec un diacide carboxylique aliphatique et d'au moins un autre monomère choisi parmi les diamines aliphatiques différentes de la précédente et les diacides aliphatiques différents du précédent.

A titre d'exemples de copolyamides, on peut citer des copolymères de caprolactame et de lauryllactame (PA 6/12), des copolymères de caprolactame, d'hexaméthylène diamine et d'acide adipique (PA 6/6.6), des copolymères de caprolactame, de lauryllactame, d'hexaméthylène diamine et d'acide adipique (PA 6/12/6.6), des copolymères de caprolactame, d'hexaméthylène diamine et d'acide azélaïque, d'acide 11-aminoundécanoïque, et de lauryllactame, (PA 6/6.9/11/12), des copolymères de caprolactame, d'acide adipique et d'hexaméthylène diamine, d'acide 11-aminoundécanoïque, de lauryllactame (PA 6/6.6/11/12), des copolymères d'hexaméthylène diamine, d'acide azélaïque, et de lauryllactame (PA 6.9/12), des copolymères de caprolactame et d'acide 11-aminoundécanoïque (PA 6/11), des copolymères de lauryllactame et de capryllactame (PA 12/8), des copolymères de capryllactame et de caprolactame (PA 8/6), des copolymères de lauryllactame et de capryllactame (PA 12/8), des copolymères de lauryllactame et d'acide 11-aminoundécanoïque (PA 12/11).

### COMPOSITIONS DE LA PHASE (B) :

La composition de la phase (B) comprend une partie majoritaire (B1) représentant 51 à 99% en poids, préférentiellement 70 à 95% en poids et une partie minoritaire (B2) représentant 1% à 49% en poids, préférentiellement 5% à 30% en poids de la composition totale (B).

La partie (B1) est constituée de polymères types (Hot Melt Adhesive) parmi lesquels on nommera les polymères du type Polyester et (ou) Copolyester, les CoPA (Copolyamide Hotmelt), et les résines du type Phénoxy.

Les polymères constituant la partie majoritaire (B1) sont utilisés séparément, cependant la demanderesse n'exclut pas la possibilité d'utiliser un mélange de deux ou plusieurs polymères en fonction des caractéristiques de collage à atteindre. On peut citer comme exemple, un mélange d'un polymère Copolyamide avec une résine du type phénoxy pour l'amélioration de l'adhérence sur un support métallique.

### PARTIES MAJORITAIRES (B1) DE LA PHASE (B) :

### Les polymères polyester et/ou Copolyester

Les polymères polyester et/ou Copolyester sont connus selon l'homme de l'art et décrits dans les brevet US. N ° 3,932,326. 3,505,293; 3,502,620; 3,668,277; 3,669,921; 3,682,863; 3,699,187, 3,423,281; Publication défensive T925,005; et Hill et al Journal of Polymer Science, Vol. 3 (5), (1948), pages 609-629. Les polyesters utilisés par exemple comme adhésifs thermofusibles sont préparés à partir d'acides dicarboxyliques et de diols. Les polyesters sont formulés par exemple à partir d'acide téréphtalique, l'acide isophtalique, l'acide adipique, de 1,4-butanediol.

### Les Copolyamides (HMA)

Les Copolyamides (HMA) constituant la partie majoritaire (B1) de la phase (B) sont identiques à ceux décrits pour la composition de la phase (A). De manière à ne pas réagir avec la partie minoritaire (B2) de la phase (B) comportant des sites réactifs du type époxydique, les fins de chaines sont de préférence du type acide COOH et /ou les groupements d'extrémités amine seront neutralisés par un acide de Brônsted à base de phosphore (« acide P »).

Par acide de Brônsted à base de phosphore, on entend tout acide comprenant du phosphore et susceptible de céder un proton c'est-à-dire un ion H⁺ en milieu aqueux. L'acide de Brônsted à base de phosphore comprend notamment au moins un des acides suivants : acide hypophosphoreux H₃PO₂, acide phosphoreux H₃PO₃, acide phosphorique H₃PO₄, acide perphosphorique H₃PO₅ et leurs dérivés tels que l'hypophosphite de sodium NaH₂P0₂, l'hypophosphite de potassium KH₂P0₂, et leurs mélanges.

De même et de façon à limiter toute réaction de la partie majoritaire (B1) avec la partie minoritaire (B2) constituée de résines époxydiques, il est également possible d'adapter lors de la synthèse les extrémités des chaines COPA (HMA) par des limitateurs de chaines. Par composés limitateurs de chaines, on entend des composés monofonctionnels ayant une fonction réactive acide tels que à titre d'exemples, l'acide acétique, l'acide laurique, l'acide stéarique, les monoacides insaturés tels les acides acrylique, méthacrylique, cinnamique, crotonique, citraconique, itaconique, vinylacétique, undécylénique, maléique, fumarique, 5-norbornène-2 acrylique, 3-furan-2 acrylique, 3-pyrrole-2 acrylique, N-allyl aminobenzoïque N-acryloyl aminobenzoïque, N-méthacryloyl aminobenzoïque, acryloyloxybenzoïque, méthacryloyloxybenzoïque, N-acryloyl ou N-méthacryloyl p- aminophénylacétique, N-allyl amino-11-undécanoïque. On ne sortirait pas du cadre de l'invention en utilisant un mélange de deux ou plusieurs de ces acides. On peut aussi utiliser les sels et les esters de ces acides.

La partie acide de ces composés monofonctionnels réagit avec les fins de chaines aminées, empêchant ainsi toute réactivité avec des résines époxydiques.

### Les résines phénoxy :

Les résines phénoxy sont des polyéthers hydroxylés linéaires possédant des terminaisons alpha glycol. Les résines phénoxy ont des masses moléculaires moyennes en poids élevées de l'ordre de 25000 à 60000.

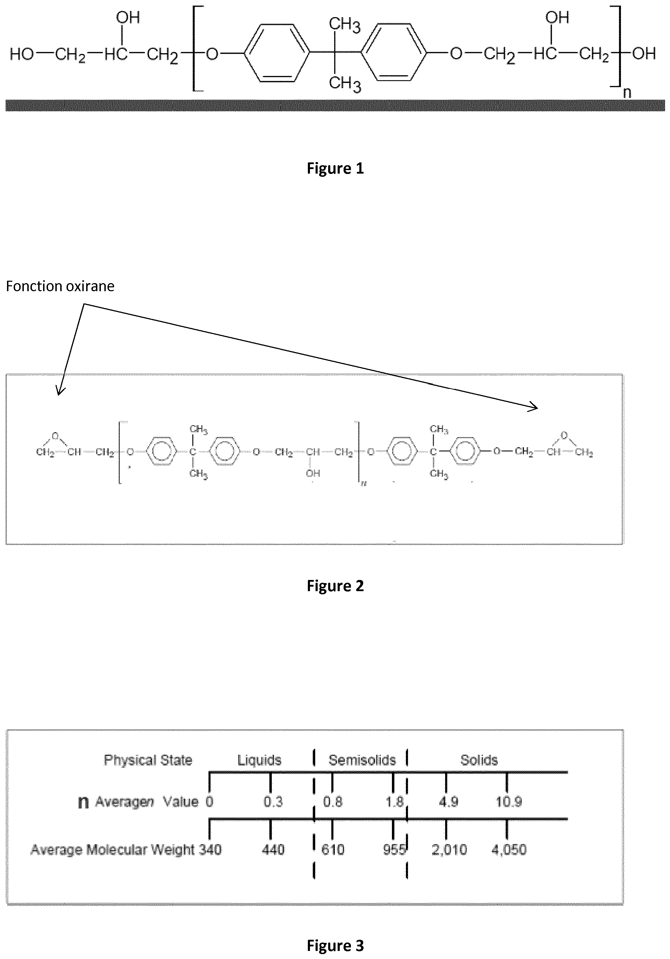

La formule chimique générale est décrite Figure 1 où "n" représente le nombre de motifs répétitifs.

Ces résines sont par exemple commercialisées par les sociétés Inchem Gabriel chemistry) et Mitsubishi respectivement sous les noms commerciaux : Résines Phénoxy - PKHA,PKHB,PKHC,PKHH,PKHJ,PKFE (Inchem) et résines Phénoxy 1256,4250,4275,1256B40,YX8100BH30,YX6954BH30(Mitsubishi). Sans exclure l'ensemble de ces références et pour des raisons de facilité de transformation particulièrement sous formes de voiles (webs) les résines et/ou les mélanges de résines comportant des basses moléculaires en poids seront préférées.

### PARTIE MINORITAIRE B2 DE LA PHASE B

La partie minoritaire (B2) est constituée d'un polymère ou d'un mélange de plusieurs polymères époxydes encore appelés d'une manière générale "résines époxy ou polyépoxydiques ou époxydiques".

On désignera par "résine époxydique" tout composé organique possédant au moins deux fonctions du type oxirane, polymérisable par ouverture de cycle.

Dans la structure chimique générale décrite dans la Figure 2, n représente le nombre de sous unités polymérisées, pouvant varier entre 0 à environ 25. En fonction de n, les résines époxydiques se présentent sous forme d'un liquide très visqueux (n< 2) ou sous forme solide n>2 (voir figure 3).

Sans exclure les résines époxydiques liquides, on préférera les résines époxydiques qui sont solides à température ambiante et de préférence des produits de réaction de l'épichlorhydrine avec du bisphénol A et / ou produits de réaction de l'épichlorhydrine avec du bisphénol F. Il est également possible d'utiliser des résines époxydiques polyfonctionnelles contenant plusieurs fonctions oxirane telles que les résines novolac (exemples : TGAP (TriGlycidyle p-amino phenol) et TGDDM (Tetraglycidylether of 4,4'diaminodiphenyl methane)).

La chimie et les structures des différentes familles de résines époxydiques sont décrites dans " Epoxy Resin adhesive" (chapitre 19-Handbook 1990) - Allan.R.MEATH- Dow Chemical (USA)-Freeport ;Texas.

Il n'est pas exclu d'introduire des catalyseurs pour accélèrer la réaction entre la phase (A) et la phase (B), en exemple des amines de faibles masses moléculaires dans la phase (A) et de catalyseurs acide (acide salicylique) dans la phase (B).

### EXEMPLES:

Dans tous les exemples une éprouvette témoin ne contenant pas la partie résine époxydique minoritaire (B2) est testée en parallèle.

### Exemple 1 :

### Composition de la phase (A) :

Copolyamide à terminaisons amines de concentration en amine 5mg/g, soit 313mmole/ kg (/de résine), soit 3194g/eq (quantité pondérale en résine /eq)
Plage de fusion DIN EN ISO 3146 : 115-130°C
Indice de fluidité à chaud (MVR) / cm3/10mn à 160°C DIN EN 1133 : 195

### Composition de la phase (B) :

Mélange à chaud des parties majoritaires et minoritaires respectivement (B1) et (B2)

### Partie majoritaire (B1) :

Composée à 60% en poids d'un copolyester de caractéristiques suivantes :
Point de fusion (DSC): 120-130°C
Melt Flow Index (MFI) :160°C/21.2N :110-120g/10mn

### Partie minoritaire (B2) :

Composée à 40% en poids d'une résine époxydique de caractéristiques suivantes :
Poids Epoxy g/eq : Méthode ASTM D 1652 : 525-550
Viscosité à 25°C Cp : ASTM D445 : 7.0-9.6.

### Conditions expérimentales et complexe de collage

La composition (A) est transformée sous forme de web à un grammage de 20 g/m2, formant ainsi la phase (A).

La composition (B) est transformée sous forme de film de grammage 50g /m2, formant ainsi la phase (B).

Les deux phases (A) et (B) sont mises en contact et placées entre deux tissus de coton 0.3 mm d'épaisseur.

Les éprouvettes sont ensuite collées dans une presse Meyer 60s à 150°C, puis refroidies à température ambiante (20°C).

### Exemple 2 :

### Composition de la phase (A) :

Copolyamide à terminaisons amines de concentration en amine 5mg/g soit 313mmole/ kg (/de résine) soit 3194g/eq (quantité pondérale en résine /eq)
Plage de fusion DIN EN ISO 3146 : 115-130°C
Indice de fluidité à chaud (MVR) / cm3/10mn à 160°C DIN EN 1133 : 195

### Composition de la phase (B) :

Mélange à chaud des parties majoritaires et minoritaires respectivement (B1) et (B2)

### Partie majoritaire (B1) :

Constituée à 90% en poids d'un copolyamide dont les extrémités de chaines sont bloquées par un monoacide insaturé et dont les caractéristiques sont les suivantes :
Plage de fusion DIN EN ISO 3146 : 110-125°C
Indice de fluidité à chaud (MVR) / cm3/10mn à 130°C DIN EN 1133 :10-15

### Partie minoritaire (B2)

Constituée à 10 % d'une résine époxydique de caractéristiques suivantes :
Poids Epoxy g/eq : Méthode ASTM D 1652 : 525-550
Viscosité à 25°C Cp : ASTM D445 : 7.0-9.6.

### Conditions expérimentales et complexe de collage

La composition (A) est transformée sous forme de web à un grammage de 20 g/m2, formant ainsi la phase (A).

La composition (B) est transformée sous forme de film de grammage 50g /m2, formant ainsi la phase (B).

Les deux phases (A) et (B) sont mises en contact et placées entre deux tissus de coton 0.3 mm d'épaisseur.

Les éprouvettes sont ensuite collées dans une presse Meyer 60s à 150°C, puis refroidies à température ambiante (20°C).

### Exemple 3 :

### Composition de la phase (A) :

Copolyamide à terminaisons amines de concentration en amine 5mg/g, soit 313mmole/ kg (/de résine), soit 3194g/eq (quantité pondérale en résine /eq)
Plage de fusion DIN EN ISO 3146 : 115-130°C
Indice de fluidité à chaud (MVR) / cm3/10mn à 160°C DIN EN 1133 : 195

### Composition de la phase (B) :

Mélange à chaud des parties majoritaires et minoritaires respectivement (B1) et (B2)

### Partie majoritaire (B1) :

Constituée à 85 % en poids d'un copolyamide dont les extrémités de chaines sont bloquées par un monoacide insaturé et dont les caractéristiques sont les suivantes :
Plage de fusion DIN EN ISO 3146 : 110-125°C
Indice de fluidité à chaud (MVR) / cm3/10mn à 130°C DIN EN 1133 :10-15

### Partie minoritaire (B2)

Constituée à 15 % en poids d'une résine époxydique de caractéristiques suivantes :
Poids Epoxy g/eq : Méthode ASTM D 1652 : 525-550
Viscosité à 25°C Cp : ASTM D445 : 7.0-9.6.

### Conditions expérimentales et complexe de collage

La composition (A) est transformée sous forme de web à un grammage de 20 g/m2, formant ainsi la phase (A).

La composition (B) est transformée sous forme de film de grammage 50g /m2, formant ainsi la phase (B).

Les deux phases (A) et (B) sont mises en contact et placées entre deux tissus de coton 0.3 mm d'épaisseur.

Les éprouvettes sont ensuite collées dans une presse Meyer 60s à 150°C, puis refroidies à température ambiante (20°C).

### Exemple 4 :

### Composition de la phase (A) :

Copolyamide à terminaisons amines de concentration en amine 5mg/g, soit 313mmole/ kg (/de résine), soit 3194g/eq (quantité pondérale en résine /eq)
Plage de fusion DIN EN ISO 3146 : 115-130°C
Indice de fluidité à chaud (MVR) / cm3/10mn à 160°C DIN EN 1133 : 195

### Composition de la phase (B) :

Mélange à chaud des parties majoritaires et minoritaires respectivement (B1) et (B2)

### Partie majoritaire (B1) :

Constituée à 70 % en poids d'un copolyamide dont les extrémités de chaines sont bloquées par un monoacide insaturé et dont les caractéristiques sont les suivantes :
Plage de fusion DIN EN ISO 3146 : 110-125°C
Indice de fluidité à chaud (MVR) / cm3/10mn à 130°C DIN EN 1133 :10-15

### Partie minoritaire (B2)

Constituée à 30 % d'une résine époxydique de caractéristiques suivantes :
Poids Epoxy g/eq : Méthode ASTM D 1652 : 1700-2300
Viscosité à 25°C Cp : ASTM D445 : 50-100
Point de fusion °C ASTM D3461 : 120 - 130

### Conditions expérimentales et complexe de collage

La composition (A) est transformée sous forme de web à un grammage de 20 g/m2, formant ainsi la phase (A).

La composition (B) est transformée sous forme de film de grammage 50g /m2, formant ainsi la phase (B).

Les deux phases (A) et (B) sont mises en contact et placées entre deux tissus de coton 0.3 mm d'épaisseur.

Les éprouvettes sont ensuite collées dans une presse Meyer 60s à 150°C, puis refroidies à température ambiante (20°C).

### Exemple 5 :

### Composition de la phase (A) :

Copolyamide à terminaisons amines de concentration en amine 5mg/g soit 313mmole/ kg (/de résine) soit 3194g/eq (quantité pondérale en résine /eq)
Plage de fusion DIN EN ISO 3146 : 115-130°C
Indice de fluidité à chaud (MVR) / cm3/10mn à 160°C DIN EN 1133 : 195

### Composition de la phase (B) :

Mélange à chaud des parties majoritaires et minoritaires respectivement (B1) et (B2)

### Partie majoritaire (B1) :

Constituée à 70 % en poids d'un copolyamide dont les extrémités de chaines sont bloquées par un monoacide insaturé et dont les caractéristiques sont les suivantes :
Plage de fusion DIN EN ISO 3146 : 110-125°C
Indice de fluidité à chaud (MVR) / cm3/10mn à 130°C DIN EN 1133 :10-15

### Partie minoritaire (B2)

Composée d'un mélange de deux résines époxydiques respectivement de 5 % en poids d'une résine époxydique de caractéristiques suivantes :
Poids Epoxy g/eq : Méthode ASTM D 1652 : 525-550
Viscosité à 25°C Cp : ASTM D445 : 7.0-9.6.
et de 25% en poids d'une résine époxydique de caractéristiques suivantes :
   Poids Epoxy g/eq : Méthode ASTM D 1652 : 1700-2300
   Viscosité à 25°C Cp : ASTM D445 : 50-100
   Point de fusion °C ASTM D3461 : 120 - 130

### Conditions expérimentales et complexe de collage

La composition (A) est transformée sous forme de web à un grammage de 20 g/m2, formant ainsi la phase (A).

La composition (B) est transformée sous forme de film de grammage 50g /m2, formant ainsi la phase (B).

Les deux phases (A) et (B) sont mises en contact et placées entre deux tissus de coton 0.3 mm d'épaisseur

Les éprouvettes sont ensuite collées dans une presse Meyer 60s à 150°C, puisrefroidies à température ambiante (20°C).

### Exemple 6 :

Les compositions (A) et (B) des exemples 1 à 5 peuvent être utilisées avec les conditions experimentales et complexe de collage suivants :
La composition (A) est transformée sous forme de web à un grammage de 20 g/m2, formant ainsi la phase (A).
La composition (B) est transformée sous forme de film de grammage 50g /m2, formant ainsi la phase (B).

Les deux phases (A) et (B) sont mises en contact et placées **entre deux tissus de polyester de0.3 mm d'épaisseur.**

Les éprouvettes sont ensuite collées dans une presse Meyer 60s à 150°C, puis refroidies à température ambiante (20°C).

### Exemple 7 :

Les compositions (A) et (B) des exemples 1 à 5 peuvent être utilisées avec les conditions experimentales et complexe de collage suivants :
La composition (A) est transformée sous forme de web à un grammage de 20 g/m2, formant ainis la phase (A).
La composition (B) est transformée sous forme de web de grammage 20g /m2, formant ainsi la phase (B).

Les deux phases (A) et (B) sont mises en contact et placées **entre deux tissus de polyester et/ou coton de0.3 mm d'épaisseur.**

Les éprouvettes sont ensuite collées dans une presse Meyer 60s à 150°C, puis refroidies à température ambiante (20°C).

### Tests de pelage à chaud

Tests de pelage à chaud effectués sur les exemples 1 à 7
Ce test est effectué 24heures après collage
Les deux bras des éprouvettes sont mis sous tension avec un poids de 20g et
placés verticalement dans une étuve.
On augmente progressivement la température de l'étuve de 0.5 degré par minute dans un intervalle de 70°C à 180°C.

### Résultats :

On ne constate aucune séparation des bras d'éprouvettes jusqu'à une température de 180°C , contrairement au témoin ne contenant pas de parties minoritaires (B1) et pour lesquelles on observe une séparation complète des supports.

## Revendications

1. Structures multiphasiques d'adhésifs thermo-réticulables destinés au collage de deux matériaux, lesdites structures étant constituées de deux ou plusieurs phases superposées ou interpénétrées et dont les compositions respectives (A) et (B) peuvent réagir ensemble par contact lors d'un procédé d'assemblage en présence de chaleur et d'une éventuelle pression pour former un joint de colle réticulé ou visqueux à chaud **caractérisées en ce que** :
- ladite composition (A) est constituée de copolyamides (CoPA) comportant des fins de chaines aminées ou acides de type COOH, et
- ladite composition (B) est constituée d'une partie majoritaire (B1) en poids constituée de polymères choisis parmi les copolyamides, les polyesters, les phénoxy ne possédant pas ou peu de fonctions réactives ; et d'une partie réactive minoritaire (B2) en poids choisie parmi les résines époxydiques.

2. Structures selon la revendication 1 **caractérisées en ce que** les phases de compositions (A) et (B) se présentent sous forme de films, de mailles (nets) ou de non tissés (webs).

3. Structures selon la revendication 2 **caractérisées en ce que** les phases de compositions (A) et (B) qui se présentent sous forme de films, de mailles (nets) ou de non tissés (webs) sont indépendamment de leurs structures associées en systèmes biphasiques ou multiphasiques.

4. Structures selon la revendication 3 dans lesquelles les phases de compositions (A) et (B) qui se présentent sous forme de non tissés (webs), sont **caractérisées en ce que** ces structures sont constituées de réseaux interpénétrés (A) et (B).

5. Structures selon l'une quelconque des revendications précédentes dans lesquelles les fins de chaines aminées des copolyamides de la composition (A) comprennent plus de 50% molaire d'extrémités aminées sur le nombre total d'extrémités aminées et acides du copolyamide.

6. Structures selon l'une quelconque des revendications précédentes dans lesquelles les fins de chaines aminées des copolyamides de la composition (A) ont été modifiées par l'utilisation de composés polyfonctionels aminés au cours de la synthèse.

7. Structures selon l'une quelconque des revendications précédentes dans lesquelles la composition (B) est constituée d'une partie majoritaire (B1) représentant 70% à 95% de la composition totale (B) et d'une partie réactive minoritaire en poids (B2) représentant 5% à 30% de la composition totale (B).

8. Structures selon l'une quelconque des revendications précédentes dans lesquelles la partie majoritaire (B1) est du type copolyamides (CoPA ), les dits copolyamides possédant des fins de chaines acides.

9. Structures selon l'une quelconque des revendications précédentes dans lesquelles la partie majoritaire (B1) est de type copolyamides (CoPA ), les dits copolyamides possédant des fins de chaines neutralisées par un acide de Brônsted, et /ou par des limitateurs de chaines composés d'acides monofonctionnels et/ou de mono acides insaturés.

10. Structures selon l'une quelconque des revendications précédentes dans lesquelles la partie majoritaire (B1) est constituée d'un mélange de résines polyester et/ou phénoxy et/ou copolyamide.

11. Structures selon l'une quelconque des revendications précédentes dans lesquelles la partie minoritaire (B2) est constituée de résines époxydiques comportant des composés organiques possédant au moins deux fonctions du type oxirane, polymérisable par ouverture de cycle.

12. Structures selon l'une quelconque des revendications précédentes dans lesquelles la composition (B) est obtenue par mélange mécanique et/ou compoundage des parties majoritaires (B1) et minoritaires (B2).

13. Structures selon l'une quelconque des revendications précédentes dans lesquelles est incorporé un catalyseur type amine dans la composition (A).

14. Structures selon l'une quelconque des revendications précédentes dans lesquelles est incorporé un catalyseur type acide dans la composition (B).

## Patentansprüche

1. Mehrphasige Strukturen wärmevernetzbarer Klebstoffe, die für das Kleben von zwei Materialien bestimmt sind, wobei die genannten Strukturen aus zwei oder mehreren überlagerten oder interpenetrierenden Phasen bestehen, und deren jeweilige Zusammensetzungen (A) und (B) durch Kontakt in einem Assemblierverfahren in Anwesenheit von Wärme und einem gegebenenfalls ausgeübten Druck miteinander reagieren können, um eine vernetzte oder heißschmelz-Klebeverbindung zu bilden, **dadurch gekennzeichnet, dass**:
- die genannte Zusammensetzung (A) aus Copolyamiden (CoPA) besteht, umfassend Enden von Amino- oder Säureketten vom Typ COOH, und
- die genannte Zusammensetzung (B) besteht aus einem mehrheitlichen Teil (B1), bezogen auf das Gewicht, bestehend aus Polymeren, die ausgewählt sind aus Copolyamiden, Polyestern, Phenoxy mit keinen oder wenigen reaktiven Funktionen; und einem minderheitlichen reaktiven Teil (B2), bezogen auf das Gewicht, der ausgewählt ist aus Epoxidharzen.

2. Strukturen nach Anspruch 1, **dadurch gekennzeichnet, dass** sich die Phasen der Zusammensetzungen (A) und (B) in der Form von Filmen, Gittern (Nets) oder Vliesstoffen (Webs) präsentieren.

3. Strukturen nach Anspruch 2, **dadurch gekennzeichnet, dass** die Phasen der Zusammensetzungen (A) und (B), die sich in der Form von Filmen, Gittern (Nets) oder Vliesstoffen (Webs) präsentieren, unabhängig von ihren Strukturen in biphasigen oder mehrphasigen Systemen assoziiert sind.

4. Strukturen nach Anspruch 3, wobei die Phasen der Zusammensetzungen (A) und (B), die sich in der Form von Vliesstoffen (Webs) präsentieren, **dadurch gekennzeichnet sind, dass** die Strukturen aus interpenetrierenden Netzen (A) und (B) bestehen.

5. Strukturen nach einem der vorhergehenden Ansprüche, wobei die Enden der Aminoketten von Copolyamiden der Zusammensetzung (A) mehr als 50 Mol-% AminoEndgruppen, bezogen auf die Gesamtanzahl von Amino- und Säureendgruppen des Copolyamids, umfassen.

6. Strukturen nach einem der vorhergehenden Ansprüche, wobei die Enden der Aminoketten von Copolyamiden der Zusammensetzung (A) durch die Verwendung von polyfunktionellen Amino-Verbindungen während der Synthese modifiziert wurden.

7. Strukturen nach einem der vorhergehenden Ansprüche, wobei die Zusammensetzung (B) besteht aus einem mehrheitlichen Teil (B1), der 70 % bis 95 % der gesamten Zusammensetzung (B) ausmacht, und einem minderheitlichen reaktiven Teil (B2), bezogen auf das Gewicht, der 5 % bis 30 % der gesamten Zusammensetzung (B) ausmacht.

8. Strukturen nach einem der vorhergehenden Ansprüche, wobei der mehrheitliche Teil (B1) vom Typ Copolyamid (CoPA) ist, wobei die genannten Copolyamide Enden von Säureketten aufweisen.

9. Strukturen nach einem der vorhergehenden Ansprüche, wobei der mehrheitliche Teil (B1) vom Typ Copolyamid (CoPA) ist, wobei die genannten Copolyamide Enden von Ketten aufweisen, die durch eine Brönstedsäure und/oder durch Kettenbegrenzer, bestehend aus monofunktionellen Säuren und/oder ungesättigten Monosäuren, neutralisiert werden.

10. Strukturen nach einem der vorhergehenden Ansprüche, wobei der mehrheitliche Teil (B1) aus einer Mischung von Polyesterharzen und/oder Phenoxy und/oder Copolyamid besteht.

11. Strukturen nach einem der vorhergehenden Ansprüche, wobei der minderheitliche Teil (B2) aus Epoxidharzen besteht, umfassend organische Verbindungen, die mindestens zwei Funktionen vom Typ Oxiran, polymerisierbar durch Ringöffnung, aufweisen.

12. Strukturen nach einem der vorhergehenden Ansprüche, wobei die Zusammensetzung (B) durch mechanisches Mischen und/oder Compoundieren des mehrheitlichen (B1) und minderheitlichen (B2) Teils erhalten wird.

13. Strukturen nach einem der vorhergehenden Ansprüche, wobei ein Katalysator vom Amin-Typ in der Zusammensetzung (A) eingeschlossen ist.

14. Strukturen nach einem der vorhergehenden Ansprüche, wobei ein Katalysator vom Säure-Typ in der Zusammensetzung (B) eingeschlossen ist.

## Claims

1. Multiphase structures of thermo-crosslinkable adhesives intended for the bonding of two materials, said structures consisting of two or more superposed or interpenetrated phases and whose respective compositions (A) and (B) can react together by contact during a process of assembly in the presence of heat and a possible pressure to form a cross-linked or hot melt adhesive joint **characterized in that**:
said composition (A) consists of copolyamides (CoPA) comprising ends of amino or acid chains of the COOH type, and
said composition (B) consists of a majority part (BI) by weight consisting of polymers chosen from copolyamides, polyesters, phenoxies having little or no reactive functions; and a minor reactive part (B2) by weight chosen from epoxy resins.

2. Structures according to claim 1, **characterized in that** the composition phases (A) and (B) are in the form of films, meshes (nets) or nonwovens (webs).

3. Structures according to claim 2 **characterized in that** the phases of compositions (A) and (B) which are in the form of films, meshes (nets) or nonwovens (webs) are, independently of their associated structures in systems, biphasic or multiphasic.

4. Structures according to claim 3 in which the phases of compositions (A) and (B) which are in the form of nonwovens (webs), are **characterized in that** these structures consist of interpenetrating networks (A) and (B).

5. Structures according to any one of the preceding claims, in which the ends of the amino chains of the copolyamides of composition (A) comprise more than 50% molar of amino ends out of the total number of amino and acid ends of the copolyamide.

6. Structures according to any one of the preceding claims, in which the ends of the amino chains of the copolyamides of composition (A) have been modified by the use of polyfunctional amino compounds during synthesis.

7. Structures according to any one of the preceding claims, in which the composition (B) consists of a majority part (B1) representing 70% to 95% of the total composition (B) and of a minority reactive part by weight (B2) representing 5% to 30% of the total composition (B).

8. Structures according to any one of the preceding claims, in which the majority part (BI) is of the copolyamide (CoPA) type, the said copolyamides having acid chain ends.

9. Structures according to any one of the preceding claims, in which the majority part (B1) is of the copolyamide (CoPA) type, the said copolyamides having chain ends neutralized by a Brønsted acid, and/or by chain stopper compounds of monofunctional acids and/or monounsaturated acids.

10. Structures according to any one of the preceding claims, in which the majority part (B1) consists of a mixture of polyester and/or phenoxy and/or copolyamide resins.

11. Structures according to any one of the preceding claims, in which the minority part (B2) consists of epoxy resins comprising organic compounds having at least two functions of the oxirane type, polymerizable by ring opening.

12. Structures according to any one of the preceding claims, in which the composition (B) is obtained by mechanical mixing and/or compounding of the majority (B1) and minority (B2) parts.

13. Structures according to any one of the preceding claims, in which an amine-type catalyst is incorporated into the composition (A).

14. Structures according to any one of the preceding claims, in which an acid-type catalyst is incorporated into the composition (B).
